(19) **Europäisches Patentamt / European Patent Office / Office européen des brevets**

(11) **EP 2 485 189 B1**

(12) **EUROPEAN PATENT SPECIFICATION**

(45) Date of publication and mention
of the grant of the patent:
**08.11.2017 Bulletin 2017/45**

(21) Application number: **10819981.1**

(22) Date of filing: **29.09.2010**

(51) Int Cl.:
*G06Q 50/00* (2012.01)   *H02J 3/00* (2006.01)
*H02J 3/38* (2006.01)

(86) International application number:
**PCT/IB2010/002462**

(87) International publication number:
**WO 2011/039610 (07.04.2011 Gazette 2011/14)**

(54) **ENERGY MANAGEMENT SYSTEM AND POWER FEED CONTROL DEVICE**

ENERGIEVERWALTUNGSSYSTEM UND VORRICHTUNG ZUR STEUERUNG DER LEISTUNGSVERSORGUNG

SYSTÈME DE GESTION D'ÉNERGIE ET DISPOSITIF DE COMMANDE DE FOURNITURE DE PUISSANCE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.09.2009 JP 2009228261**

(43) Date of publication of application:
**08.08.2012 Bulletin 2012/32**

(73) Proprietor: **Panasonic Intellectual Property Management Co., Ltd.**
**Osaka 540-6207 (JP)**

(72) Inventors:
• **MISE, Atsushi**
**Osaka 540-6207 (JP)**

• **KOBAYASI, Susumu**
**Osaka 540-6207 (JP)**

(74) Representative: **Müller-Boré & Partner Patentanwälte PartG mbB**
**Friedenheimer Brücke 21**
**80639 München (DE)**

(56) References cited:
| | |
|---|---|
| WO-A2-2008/125696 | GB-A- 2 448 504 |
| JP-A- 2003 189 477 | JP-A- 2003 223 917 |
| JP-A- 2004 263 622 | JP-A- 2005 218 193 |
| JP-A- 2005 226 918 | JP-A- 2005 287 210 |
| JP-A- 2008 158 701 | US-A1- 2004 263 116 |
| US-A1- 2006 276 938 | US-A1- 2008 046 387 |
| US-B1- 7 373 222 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to an energy management system which manages electric power generated by an electric power generation apparatus for generating electric power using natural energy and electric power supplied to loads, i.e., electric appliances, and a power feed control device which is used by the energy management system.

Background of the Invention

WO 2008/125696 A2 discloses a load management controller for a household electrical installation comprising a pair of electricity supplies, a grid supply and a micro-generator supply, providing electricity to a plurality of sub-circuits. The household electrical installation has means to monitor the amount of electricity being supplied by the micro-generator supply and the amount of electricity being consumed in the household. The load management controller has means to access and use that information to control the supply of electricity to an energy storage sub-circuit to route surplus electricity supplied by the micro-generator to the energy storage sub-circuit. Furthermore, the load management controller can communicate with a remote electricity supplier to control the loads in the household to achieve better grid management and efficiency.

US 2008/046387 A1 discloses a system for automatic control of local generation, consumption, storage, buying, and selling of electrical energy. This automation can be governed by optimization criteria and policies established by the administrative entity responsible for the domain benefiting from this invention. The control method, using a data processing computer, implements the optimization criteria and provides near real time directives for the system. The control program estimates energy generation and consumption, monitors voltage and power levels, configures the power circuit and adjusts device specific controls over a network. Depending on a specific situation, the control program can continue to store extra energy, sell energy for a financial gain, maximize sustainable generation to meet social obligations, or increase consumption for extra comfort.

GB 2 448 504 A discloses A load management controller for a household electrical installation. The household electrical installation comprises a main panel receiving electricity from a pair of electricity supplies and distributing the electricity to a plurality of electrical sub-circuits. One of the electrical sub-circuits is an energy storage sub-circuit. The pair of electricity supplies comprises a grid supply and a micro-generator supply. The load management controller comprises means to measure the electricity generated by the micro-generator supply and the electricity consumed by the household and supply any surplus electricity to the energy storage sub-circuit. The energy storage sub-circuit may comprise an immersion heater or a storage heating unit.

JP 2008 158701 A discloses a system wherein a power generation apparatus and a commercial system are linked. A display device is connected with a power measurement device measuring a power amount sold to the commercial system and a power amount purchased from the commercial system via a network. The display device stores calculation base information that is used for calculating an electricity charge with the sold power amount, the purchased power amount, and charge unit prices of both the power amounts, calculates the electric charge and displays it.

US 2004/263116 A1 discloses a distributed energy storage system for demand side power management. It provides a system that can store electric energy close to the point of use or close to the distributed production for use when demanded by the users. These storage nodes can communicate with a central clearing entity to negotiate if the nodes should buy energy for storage, provide energy to the user above a given power level, or sell power back to the grid. The function will depend on the amount of energy stored in the node, the cost of the electric energy, the cost of the electric peak power, the price of resold electrical energy and power, plus the local usage.

Conventionally, there is known a system which supplies electric power generated by solar cells to the electric appliances first and sell the surplus electric power of the generated electric power to an electric power company. A price advantage obtained by selling the surplus electric power has acted as an incentive to introduce solar cells. From the viewpoint of the price advantage and the reduction of $CO_2$ (saving of $CO_2$), it is expected that the price of electric power to be sold rises in the future, so that the introduction of solar cells will be promoted. The price advantage is greatly affected by the price of power to be sold which is set over time by an electric power company.

As a conventional system to which solar cells are introduced, Japanese Patent Application Publication No. 2008-158701 (JP2008-158701A) discloses a system for supplying information which is useful for selecting an appropriate electricity rate design from various types of price designs supplied by an electric power company. The system disclosed in JP2008-158701A provides useful information to select the appropriate electricity rate design by collecting information about the amounts of electric power generated by solar cells, the amounts of electric power consumption of electric appliances, and the amounts of electric power transacted with an electric power company and selecting the appropriate price design.

Furthermore, Japanese Patent Application Publication No. 2002-369381 discloses a system for minimizing loss resulting from the difference in price over time when the surplus self-generated electric power is sold. Japanese Patent Application Publication No. 2005-287211 discloses a system for operating a cogeneration apparatus which drives an electric power generation apparatus using a gas engine in order to reduce the price obtained from calculation based on the time-based prices of electric power to be sold to an electric power company and the time-based prices of electric power to be purchased from the electric power company.

Moreover, conventional systems to which solar cells are introduced include a system provided with an electric power storage device which is used to store electric power generated by solar cells. According to this system, it is possible to determine whether to sell electric power, generated by solar cells, to an electric power company or to store the electric power in the electric power storage device. That is, the system can select the destination of the electric power generated by the solar cells.

Summary of the Invention

However, the system to which the solar cells and the electric power storage device are introduced is requested to produce a greater price advantage by automatically controlling a destination of the electric power, generated by the solar cells, in response to the price of electric power to be sold, which is changed over time.

The system disclosed in JP2008-158701A provides information to be used by users to select an appropriate electricity rate design from a plurality of predetermined electricity rate designs. However, the above system is not provided with means for automatically determining a destination to which the electric power generated by the solar cells is supplied in order to actually maximize the price advantage.

Further, although the system disclosed in JP2002-369381A can effectively change a time span in which electric power is sold, the system is not provided with means for automatically determining a destination to which electric power generated by the solar cells is supplied. That is, the system cannot determine whether to sell or store the electric power generated by the solar cells.

Furthermore, the cogeneration apparatus can be operated to reduce a cost by controlling the supply of gaseous fuel as in the system disclosed in JP2005-287211A. However, the electric power, generated by the solar cells which generate electric power using solar energy, cannot be adjusted.

As described above, the conventional systems cannot automatically determine the destination to which the generated electric power is supplied such that the price advantage is maximized in the state in which the electric power generation apparatus for generating electric power using natural energy and the energy storage device for storing the generated electric power are introduced.

In view of above, the present invention provides an energy management system which can improve cost effectiveness when using electric power generated by an electric power generation apparatus for generating electric power using natural energy, and a power feed control device which is used by the energy management system.

In accordance with one aspect of the present invention, there is provided an energy management system, having the features of claim 1.

Further, it is preferred that the energy management system may further include a path switching unit for supplying the electric power generated by the electric power generation apparatus to the electric appliance and switching the destination to which the surplus electric power is supplied; and an information acquisition unit for acquiring the information about the price of electric power to be sold to an electric power company, wherein the candidates include the electric power company to which the surplus electric power is sold, and an energy storage device which is capable of storing energy corresponding to the surplus electric power, wherein the priority order of candidates in the rules is set corresponding to the price of electric power to be sold, and wherein the controller determines the priority order by referring to the information about the price of electric power to be sold, and controls the path switching unit such that the destination, to which the surplus electric power is supplied, is sequentially switched according to the priority order of the candidates.

With such configuration, when the price of electric power to be sold is changed, the priority order of the candidates of the plurality of destinations of the surplus electric power of the electric power generation apparatus is

determined using the information about the price of electric power to be sold and the rules regarding the use of electric power, and the surplus electric power is sequentially supplied to the destination in the order of the candidates of the destinations having higher priorities, so that the price performance can be improved when the electric power generated by the electric power generation apparatus is used. Furthermore, the energy storage device is included in the destinations, so that the priorities of electric power sale and electric power storage can be selected based on the information about the price of electric power to be sold, thereby more effectively using the electric power generated by the electric power generation apparatus.

The information acquisition unit acquires information about a price of electric power to be purchased from the electric power company as well as the information about the price of electric power to be sold, the priority order of candidates in the rules is set corresponding to the price of electric power to be sold and the price of electric power to be purchased, and the controller determines the priority order by referring to the information about the price of electric power to be sold and the information about the price of electric power to be purchased.

Therefore, the controller can determine the priority of each of the plurality of destinations using the information about the price of electric power to be sold, so that the cost effectiveness can be improved.

Preferably, the energy management system may further include a computation unit for calculating a balance of an electricity price by using a load pattern indicative of a temporal change in electric power that is supplied to the electric appliance, an electric power generation pattern indicative of a temporal change in electric power that is generated by the electric power generation apparatus, and the information about the price of electric power to be sold and the information about the price of electric power to be purchased, wherein the priority order of candidates in the rules is set by using a result obtained from the computation unit.

Therefore, the balance of the electricity price is calculated when the rules regarding the use of electric power are set, so that the effective rules regarding the use of electric power can be accurately set.

Preferably, the energy storage device may include an electric power storage device for storing the surplus electric power, and a heat storage device for storing heat corresponding to the surplus electric power.

With such configuration, the electric power storage and the heat storage can be selected as means for storing the surplus electric power of the solar cells, so that it is possible to change a criteria for determining whether to store the surplus electric power or heat corresponding to the surplus electric power depending on, for example, temperature in the rules regarding the use of electric power.

Preferably, a time span in which the energy storage device is used may be set; and the controller may determine the priority order of candidates in the rules by referring to the information about the price of electric power to be purchased during the time span.

Further, when settings are made such that the energy storage device is operated (stored energy is consumed using the energy storage device) during a specific time span (for example, during the night), the value of the generation of electric power using the electric power generation apparatus is evaluated during the specific time span, so that the cost effectiveness can be accurately evaluated.

Preferably, the energy management system may further include a selection unit for selecting one of the rules, wherein the storage unit stores the rules being set differently, and wherein the selection unit selects one of the rules stored in the storage unit based on predetermined conditions.

Therefore, one of the rules regarding the use of electric power can be selected, so that a user can select appropriate rules regarding the use of electric power depending on the situation.

One of the rules be set such that the energy storage device has a higher priority order than that of the electric power company in terms of the priority order of candidates.

With such configuration, the rules regarding the use of electric power prescribing that the energy storage device has priority over the electric power company are stored, so that the rules regarding the use of electric power can be selected based on the desires of the user, thereby actively supplying as much electric power generated by the electric power generation apparatus using natural energy to the electric appliance is possible by storing the generated electric power in the energy storage device. In the case of the electric power generated using natural energy, an amount of $CO_2$ generated from any one of a primary energy consumption source group is almost 0, so that the electric power generated by the electric power generation apparatus is sold as little as possible and is consumed, thereby reducing the burden upon the environment.

In accordance with another aspect of the present invention, there is provided a power feed control device for use in the energy management system of the one aspect of the present invention, including: the controller; the information acquisition unit; and the storage unit.

Brief Description of the Drawings

The object and features of the present invention will be apparent from the following description of embodiments when taken in conjunction with the accompanying drawings, in which:

Fig. 1 is a block diagram illustrating the configuration of a first embodiment;
Fig. 2 is a view illustrating the patterns of the priority order of destinations;
Fig. 3 is a view illustrating a load pattern and an electric power generation pattern for a day;
Fig. 4 is a flowchart illustrating the operation of a related energy management system;
Fig. 5 is a view illustrating a decision line that is used to determine whether to sell or store the surplus electric power of solar cells in the energy management system;
Figs. 6A and 6B are views illustrating decision lines that are used to determine whether to store the surplus electric power of the solar cells or to store heat corresponding to the surplus electric power in the energy management system, wherein Fig. 6A is a view illustrating the characteristics of respective seasons in the same region, and Fig. 6B is a view illustrating the characteristics of respective regions in the same season;

Fig. 7A is a view illustrating a case where a price of electric power to be sold is ¥25/kWh, and Fig. 7B is a view illustrating a case where the price of electric power to be sold is ¥40/kWh in the relationships between a price of electric power to be purchased and an annual heating and lighting price in the energy management system shown in Fig. 6;

Fig. 8 is a view illustrating the patterns of the priority order of destinations in accordance with a second embodiment; and

Fig. 9 is a flowchart illustrating the operation of a related energy management system.

Detailed Description of the Preferred Embodiments

Embodiments of the present invention will be described in detail below with reference to the accompanying drawings that constitute a part hereof. The same reference numerals will be assigned to the same or similar components throughout the drawings, and redundant descriptions thereof will be omitted.

(First Embodiment)

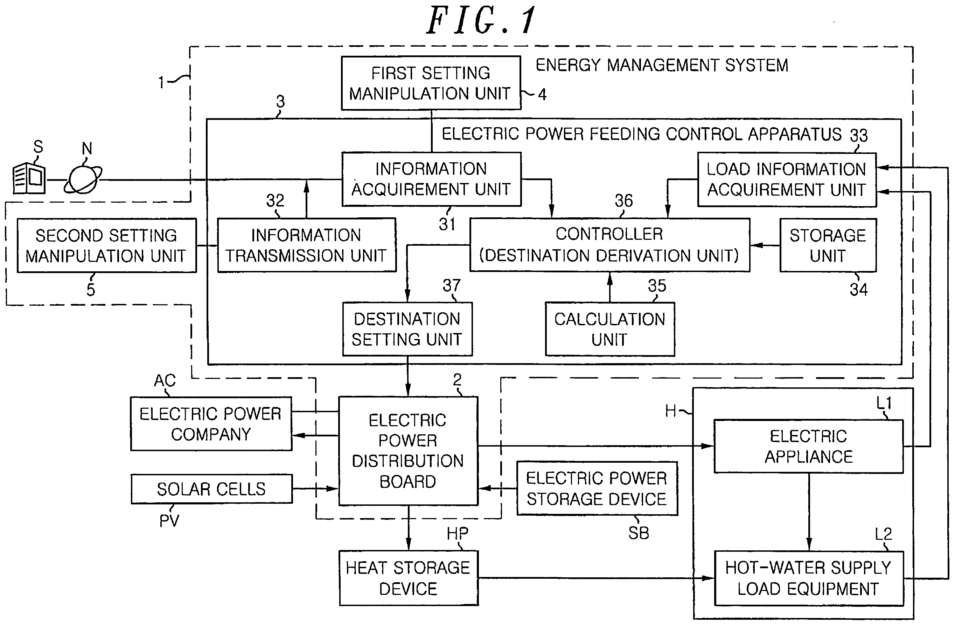

An energy management system 1 in accordance with a first embodiment manages electric power generated by solar cells PV and electric power supplied to a load, i.e., an electric appliance L1 which is provided in a facility H, as shown in Fig. 1. The solar cells PV are an electric power generation apparatus for generating electric power using solar energy, which is natural energy. The energy management system 1 includes an electric power distribution board 2, a power feed control device 3, a first setting manipulation unit 4, and a second setting manipulation unit 5. In Fig. 1, thick arrows indicate the flows of electric power supply, thin arrows indicate the flows of signals, and a dotted arrow indicates the flow of thermal supply.

In the present invention, the electric power generation apparatus refers to solar cells which generate electric power using solar energy and a wind power generation apparatus which generates electric power using wind energy. Furthermore, an energy storage device in accordance with the present invention refers to an electric power storage device which stores surplus electric power or a heat storage device which stores thermal energy corresponding to the surplus electric power.

In the present embodiment, the electric power distribution board 2 supplies electric power supplied from an electric power company AC or electric power generated by the solar cells PV to the electric appliance L1, and, at the same time, changes a destination to which the surplus electric power of the generated electric power is supplied and provides the surplus electric power to the destination. The electric power distribution board 2 corresponds to a path switching unit of the present invention. Furthermore, direct current (DC)/alternating current (AC) conversion is appropriately performed on the electric power which is supplied from the solar cells PV to the electric appliance L1 or the destination.

The destination includes the electric power company AC to which the surplus electric power is sold, the electric power storage device (storage battery) SB which stores the surplus electric power, and the heat storage device HP which stores thermal energy corresponding to the surplus electric power. The electric power storage device SB can supply electric power to the electric appliance L1 via the electric power distribution board 2. In the electric power storage device SB, the upper and lower limits of an electric power storage rate and electric power storage speed (for example, 1kW/h) are set and charge and discharge losses occur. The heat storage device HP operates hot-water supply load equipment L2 by providing thermal energy to the hot-water supply load equipment L2. In the heat storage device HP, the upper and lower limits of a heat storage rate are previously set and heat discharge loss occurs. In each of the electric power storage device SB and the heat storage device HP, a main time span for use is set. In the present embodiment, settings are made such that the electric power storage device SB is mainly used during the daytime and the heat storage device HP is mainly used during the nighttime. The electric power storage device SB and the heat storage device HP correspond to the energy storage device of the present invention.

The power feed control device 3 includes an information acquisition unit 31, an information transmission unit 32, a load information acquisition unit 33, a storage unit 34, a computation unit 35, a controller (destination derivation unit) 36, and a destination setting unit 37.

The information acquisition unit 31 has a function of receiving information from a center server S over a network N. The information acquisition unit 31 receives and acquires information about the price of electric power to be sold to the electric power company AC, and information about the price of electric power to be purchased from the electric power company AC from the center server S in real time. Furthermore, the information acquisition unit 31 can acquire the information about the price of electric power to be sold and the information about the price of electric power to be purchased in such a way that a user manipulates the setting of the first setting manipulation unit 4. Therefore, even when the information acquisition unit 31 is not connected to the center server S, the information acquisition unit 31 can acquire the information about the price of electric power to be sold and information about the price of electric power to be purchased.

The information transmission unit 32 has a function of transmitting information to the center server S via the network N. The information transmission unit 32 transmits information, received from the second setting manipulation unit 5 which is manipulated by the user, to the center server S. The information includes regional information (electric power company information) or an electric power contract form.

The load information acquisition unit 33 acquires the load information of the electric appliance L1 and the hot-water supply load equipment L2.

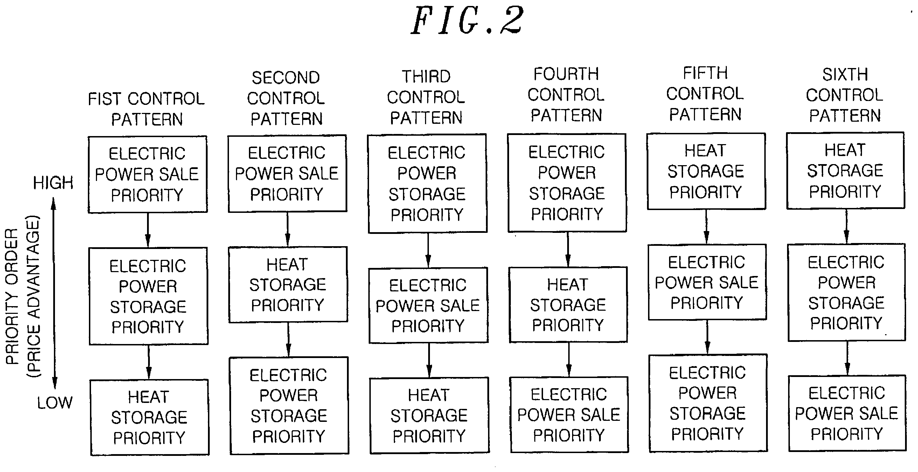

The storage unit 34 stores the information about the price of electric power to be sold and the information about the price of electric power to be purchased which are acquired by the information acquisition unit 31, and stores rules regarding the use of electric power. In the rules regarding the use of electric power, the priority order of the plurality of destinations (the electric power company AC, the electric power storage device SB, and the heat storage device HP) of the surplus electric power of the solar cells PV is set in conjunction with the price of electric power to be sold and the price of electric power to be purchased. The priority order of the plurality of destinations includes six control patterns (first to sixth control patterns), as shown in Fig. 2. For example, in the first control pattern, first priory is given to electric power sale and the surplus electric power of the solar cells PV is sold to the electric power company AC. When all of the surplus electric power cannot be sold to the electric power company AC, subsequent priority is given to electric power storage and the surplus electric power is stored in the electric power storage device SB. Thereafter, when the surplus electric power is still left over, priority is given to heat storage and heat corresponding to the surplus electric power is stored in the heat storage device HP.

In the rules regarding the use of electric power, the priority order of the plurality of destinations is set based on the results of calculation performed by the computation unit 35. The computation unit 35 calculates the balance of an electricity price using a load pattern indicative of the temporal change of the load electric power of the electric appliance L1, an electric power generation pattern indicative of the temporal change of the electric power generated by the solar cells PV, the information about the price of electric power to be sold, and the information about the price of electric power to be purchased, which are acquired by the information acquisition unit 31. Furthermore, the load pattern and the electric power generation pattern are stored in the storage unit 34 in advance.

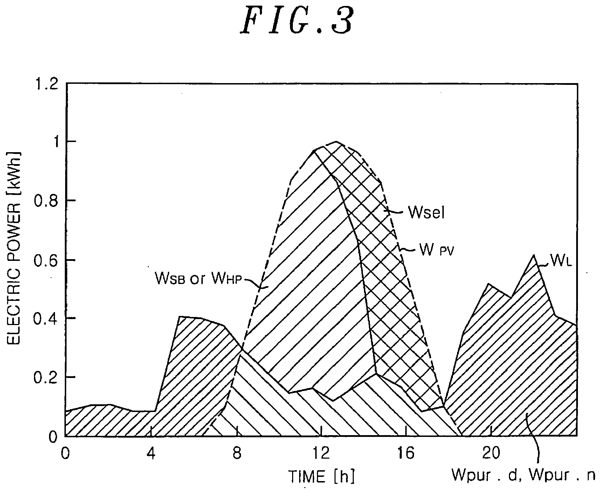

Fig. 3 illustrates a load pattern $W_L$ and an electric power generation pattern $W_{PV}$ which are stored in the storage unit 34. First, the balance of the electricity price is expressed by Equation 1 when the surplus electric power of electric power generated by the solar cells PV, which is left behind after the electric power has been supplied to the load equipment, is not stored in the electric power storage device SB and all of the surplus electric power is sold to the electric power company AC. Furthermore, the balance of the electricity price is expressed by Equation 2 when heat corresponding to the surplus electric power of the solar cells PV is not stored in the heat storage device HP and all of the surplus electric power is sold to the electric power company AC:

$$(W_{sel1} + W_{SB}) \times c_{sel} - (W_{pur,d} \times d_{pur,d} + W_{pur,n} \times d_{pur,n}) \quad (1)$$

$$(W_{sel2} + W_{HP}) \times c_{sel} - (W_{pur,d} \times d_{pur,d} + W_{pur,n} \times d_{pur,n}) \quad (2)$$

where "$c_{sel}$" is the price of electric power to be sold, "$d_{pur.d}$" is the electric power sale price during the day, "$d_{pur.n}$" is the electric power sale price during the night, "$W_{sel1}$" is electric power obtained by excluding the amount of electric power supplied to the electric power storage device SB from the surplus electric power of the solar cells PV when electric power is stored, "$W_{sel2}$" is electric power obtained by excluding the amount of electric power supplied to the heat storage device HP from the surplus electric power of the solar cells PV when heat is stored, "$W_{SB}$" is the amount of electric power supplied to the electric power storage device when electric power is stored, "$W_{HP}$" is the amount of electric power supplied to the heat storage device when heat is stored, "$W_{pur.d}$" is the amount of electric power to be sold during the day, and "$W_{pur.n}$" is the amount of electric power to be sold during the night.

Meanwhile, when priority is given to store the surplus electric power in the electric power storage device SB and some of the surplus electric power is left after performing the electric power storage, the balance of the electricity price is expressed by Equation 3. Furthermore, when priority is given to store the heat to the heat storage device HP and some of the surplus electric power is left after performing the heat storage, the balance of the electricity price is expressed by Equation 4:

$$W_{sel1} \times c_{sel} - \{(W_{pur,d} - W_{SB} \times \eta_{SB}) \times d_{pur,d} + W_{pur,n} \times d_{pur,n}\} \quad (3)$$

$$W_{sel2} \times c_{sel} - \left\{ W_{pur,d} \times d_{pur,d} + (W_{pur,n} - W_{HP} \times \eta_{HP}) \times d_{pur,n} \right\} \quad (4)$$

where "$\eta_{SB}$" is the efficiency of the electric power storage device SB (including electric power charge efficiency and electric power discharge efficiency), and "$\eta_{HP}$" is the efficiency of the heat storage device HP (including heat radiation efficiency).

Here, when a case where a priority is given to the electric power sale is compared with a case where a priority is given to the electric power storage (in this case, the case that the priority is given to the electric power sale refers to the case where all of the electric power is sold without being stored as in Equation 1; the same hereinafter), Equation 1 is compared with Equation 3. When a value obtained using Equation 1 is greater than a value obtained using Equation 3, the case where the priority is given to the electric power sale is more economical than the case where the priority is given to the electric power storage. When the value obtained using Equation 1 is less than the value obtained using Equation 3, the case where the priority is given to the electric power storage is more economical than the case where the priority is given to the electric power sale.

Equation 1 - Equation 3

$$= \left[ (W_{sel1} + W_{SB}) \times c_{sel} - (W_{pur,d} \times d_{pur,d} + W_{pur,n} \times d_{pur,n}) \right] - \left[ W_{sel1} \times c_{sel} - \left\{ (W_{pur,d} - W_{SB} \times \eta_{SB}) \times d_{pur,d} + W_{pur,n} \times d_{pur,n} \right\} \right]$$

$$= W_{SB} \times (c_{sel} - \eta_{SB} \times d_{pur,d}) \quad (5)$$

According to Equation 5, if it is assumed that the efficiency "$\eta_{SB}$" of the electric power storage device SB is almost constant, the priority order of the electric power sale and the electric power storage is determined by the price of electric power to be sold "$c_{sel}$" and the price of electric power to be purchased during the day "$d_{pur,d}$".

When a case where a priority is given to the electric power sale is compared with a case where a priority is given to a heat storage (in this case, the case where the priority is given to the electric power sale refers to the case where entire electric power is sold without being stored, as in Equation 2; the same hereinafter), Equation 2 is compared with Equation 4. When a value obtained using Equation 2 is greater than a value obtained using Equation 4, the case where the priority is given to the electric power sale is more economical than the case where the priority is given to the heat storage. When the value obtained using Equation 2 is less than the value obtained using Equation 4, the case where the priority is given to the heat storage is more economical than the case where the priority is given to the electric power sale.

Equation 2 - Equation 4

$$= \left[ (W_{sel2} + W_{HP}) \times c_{sel} - (W_{pur,d} \times d_{pur,d} + W_{pur,n} \times d_{pur,n}) \right] - \left[ W_{sel2} \times c_{sel} - \left\{ W_{pur,d} \times d_{pur,d} + (W_{pur,n} - W_{HP} \times \eta_{HP}) \times d_{pur,n} \right\} \right]$$

$$= W_{HP} \times (c_{sel} - \eta_{HP} \times d_{pur,n}) \quad (6)$$

According to Equation 6, if it is assumed that the efficiency "$\eta_{HP}$" of the heat storage device HP is almost constant, the priority order of the electric power sale and the heat storage is determined by the price of electric power to be sold "$c_{sel}$" and the price of electric power to be purchased during the night "$d_{pur,n}$".

When the case where a priority is given to the electric power storage is compared with the case where a priority is given to the heat storage, Equation 3 is compared with Equation 4. When the value obtained using Equation 3 is greater than the value obtained using Equation 4, the case where the priority is given to the electric power storage is more economical than the case where the priority is given to the heat storage. When the value obtained using Equation 3 is less than the value obtained using Equation 4, the case where the priority is given to the heat storage is more economical than the case where the priority is given to the electric power storage.

Equation 3 - Equation 4

$$= [W_{sel1} \times c_{sel} - \{ (W_{pur,d} - W_{SB} \times \eta_{SB}) \times d_{pur,d} + W_{pur,n} \times d_{pur,n} \}] - [W_{sel2} \times c_{sel} -$$

$$\{ W_{pur,d} \times d_{pur,d} + (W_{pur,n} - W_{HP} \times \eta_{HP}) \times d_{pur,n} \}]$$

$$= (W_{sel1} \times c_{sel} + W_{SB} \times \eta_{SB} \times d_{pur,d}) - (W_{sel2} \times c_{sel} + W_{HP} \times \eta_{HP} \times d_{pur,n}) \quad (7)$$

In Equation 7, the priority order of the electric power storage and the heat storage cannot be determined by only the price of electric power to be sold "$c_{sel}$" and the prices of electric power to be purchased "$d_{pur,d}$" and "$d_{pur,n}$", but is changed based on the amounts of electric power to be sold "$W_{sel1}$" and "$W_{sel2}$", the amount of electric power to be supplied to the electric power storage device "$W_{SB}$", and the amount of electric power to be supplied to the heat storage device "$W_{HP}$".

The rules regarding the use of electric power in accordance with the present embodiment are set such that the case where the priority is given to the electric power sale is compared with the case where the priority is given to the heat storage using Equation 6 first, the case where the priority is given to the electric power sale is compared with the case where the priority is given to the electric power storage priority using Equation 5 subsequently, and then the case where the priority is given to the electric power storage is compared with the case where the priority is given to the heat storage using Equation 7 finally.

The controller 36 shown in Fig. 1 controls the electric power distribution board 2 such that the electric power generated by the solar cells PV is supplied to the electric appliance L1 first. The controller 36, which performed the above-described control, selects a destination, to which the surplus electric power of the solar cells PV is supplied, from a plurality of destination candidates. The plurality of destination candidates are the electric power company AC, the electric power storage device SB, and the heat storage device HP. The controller 36 refers to the rules regarding the use of electric power for the information about the price of electric power to be sold and the information about the price of electric power to be purchased, which are acquired by the information acquisition unit 31, and then determines the priority order of the plurality of destinations. The controller 36, which determined the priority order, controls the electric power distribution board 2 such that the surplus electric power is sequentially provided to a corresponding destination according to the determined priority order. Information about destinations determined by the controller 36 is transmitted to the electric power distribution board 2 by the destination setting unit 37.

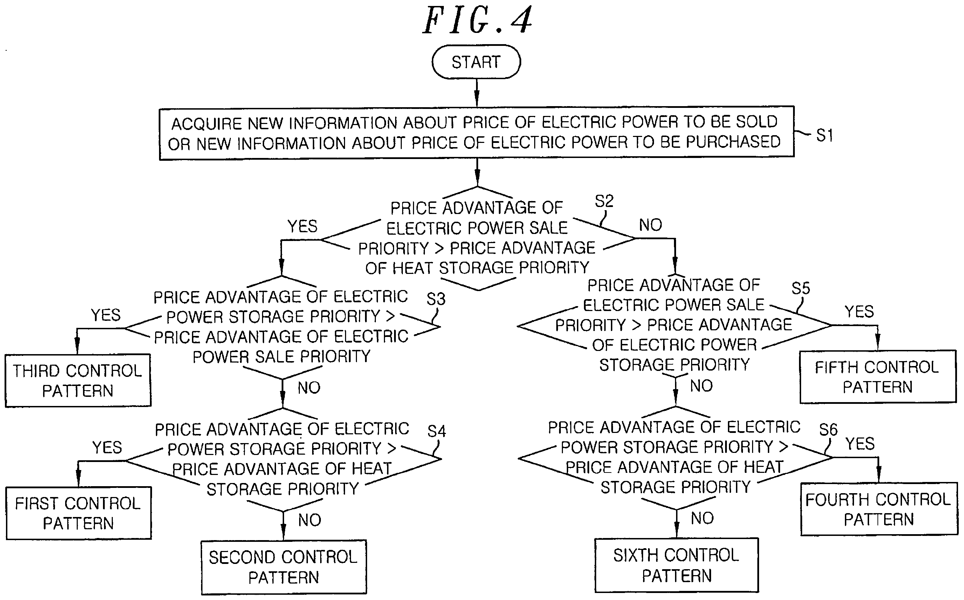

Next, the operation of the energy management system 1 in accordance with the present embodiment will be described with reference to Fig. 4. First, when the information acquisition unit 31 of the power feed control device 3 acquires new information about the price of electric power to be sold or new information about the price of electric power to be purchased (at step S1 in Fig. 4), the controller 36 refers to rules regarding the use of electric power for the information about the price of electric power to be sold and the information about the price of electric power to be purchased, and then determines the priority order of the plurality of destinations (the electric power company AC, the electric power storage device SB, and the heat storage device HP). Here, first, the controller 36 compares the price advantage of the case where the priority is given to the electric power sale with the price advantage of the case where the priority is given to the heat storage (at step S2). When the price advantage of the case where the priority is given to the electric power sale is greater than the price advantage of the case where the priority is given to the heat storage, the price advantage of the case where the priority is given to the electric power storage is compared with the price advantage of the case where the priority is given to the electric power sale (at step S3). When the price advantage of the case where the priority is given to the electric power storage is greater than the price advantage of the case where the priority is given to the electric power sale, the controller 36 sets the control pattern of the surplus electric power of the solar cells PV as the third control pattern (see Fig. 2). When the price advantage of the case where the priority is given to the electric power storage is less than the price advantage of the case where the priority is given to the electric power sale, the price advantage of the case where the priority is given to the electric power storage is compared with the price advantage of the case where the priority is given to the heat storage (at step S4). When the price advantage of the case where the priority is given to the electric power storage is greater than the price advantage of the case where the priority is given to the heat storage, the controller 36 sets the control pattern of the surplus electric power of the solar cells PV as the first control pattern (see Fig. 2). When the price advantage of the case where the priority is given to the electric power storage is less than the price advantage of the case where the priority is given to the heat storage, the controller 36 sets the control pattern of the surplus electric power of the solar cells PV as the second control pattern (see Fig. 2).

Meanwhile, when the price advantage of the case where the priority is given to the electric power sale is less than the price advantage of the case where the priority is given to the heat storage at step S2, the price advantage of the case where the priority is given to the electric power sale is compared with the price advantage of the case where the priority is given to the electric power storage (at step S5). When the price advantage of the case where the priority is given to the electric power sale is greater than the price advantage of the case where the priority is given to the electric power storage, the controller 36. sets the control pattern of the surplus electric power of the solar cells PV as the fifth control pattern (refer to Fig. 2). When the price advantage of the case where the priority is given to the electric power sale is less than the price advantage of the case where the priority is given to the electric power storage, the price advantage of the case where the priority is given to the electric power storage is compared with the price advantage of the case where the priority is given to the heat storage (at step S6). When the price advantage of the case where the priority is given to the electric power storage is greater than the price advantage of the case where the priority is given to the heat storage, the controller 36 sets the control pattern of the surplus electric power of the solar cells PV as the fourth control pattern (see Fig. 2). When the price advantage of the case where the priority is given to the electric power storage is less than the price advantage of the case where the priority is given to the heat storage, the controller 36 sets the control pattern of the surplus electric power of the solar cells PV as the sixth control pattern (see Fig. 2).

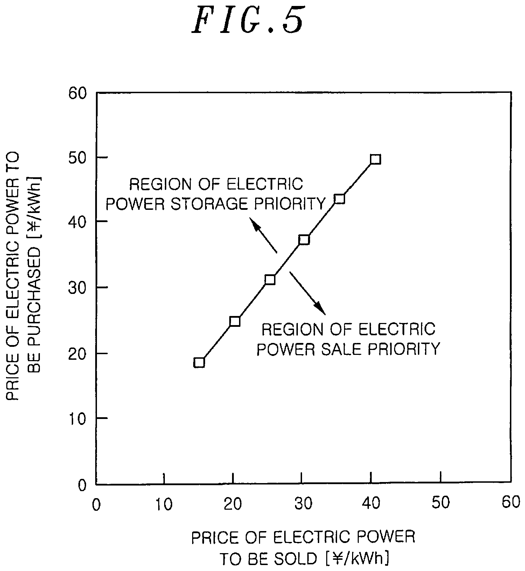

Fig. 5 illustrates an example of a decision line that is used to determine whether to sell or store the surplus electric power of the solar cells PV. When the decision line shown in Fig. 5 is used and if the price of electric power to be purchased is ¥25/kWh, the controller 36 selects the electric power sale even in the case where the price of electric power to be sold is ¥25/kWh or ¥40/kWh. Meanwhile, if the price of electric power to be purchased is ¥35/kWh, the controller 36 selects the electric power sale in the case where the price of electric power to be sold is ¥40/kWh. However, if the price of electric power to be sold is ¥25/kWh, the controller 36 does not select the electric power sale.

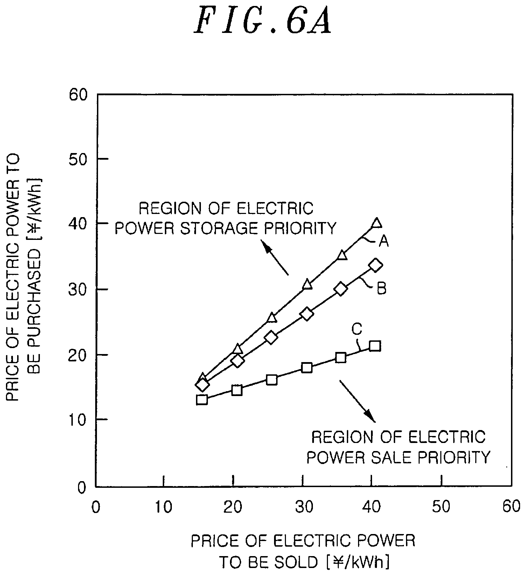

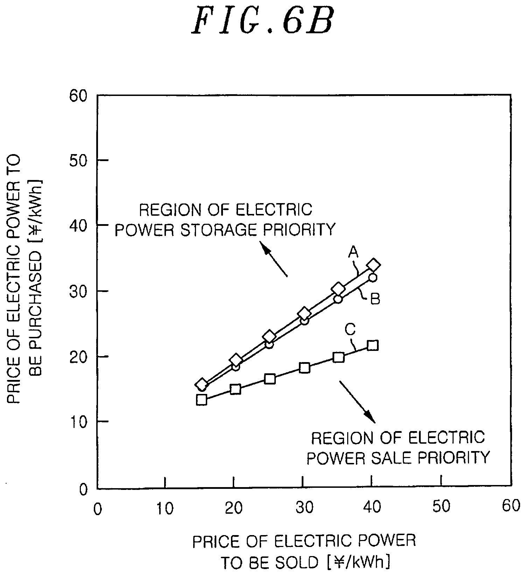

Figs. 6A and 6B illustrate examples of decision lines that are used to determine whether to store the surplus electric power of the solar cells PV or store heat corresponding to the surplus electric power. Fig. 6A illustrates the characteristics of the respective seasons in the same region. In Fig. 6A, "A" is the decision line of summer, "B" is the decision line of an intermediate period (spring or fall), and "C" is the decision line of winter. According to Fig. 6A, the decision lines are changed seasonally. Fig. 6B illustrates the characteristics of the respective regions in the same season (winter in the example of the drawing). In Fig. 6B, "A" is the decision line of the hottest region, "B" is the decision line of the intermediate region, and "C" is the decision line of the coldest region. According to Fig. 6B, the decision lines are changed depending on regions. In the above-description, the energy management system 1 in accordance with the present embodiment can change the decision lines depending on the temperature.

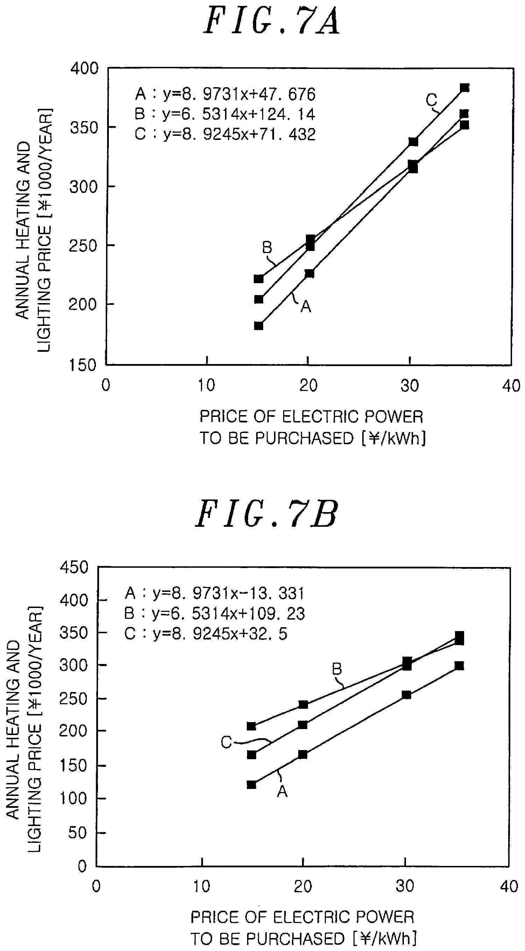

Furthermore, Figs. 7A and 7B illustrate the relationships of the price of electric power to be purchased and the annual heating and lighting price in the cases where the priorities are given to the electric power sale, the electric power storage and the heat storage for a specific region. In Figs. 7A and 7B, "A" is the characteristic in the case where the priority is given to the electric power sale, "B" is the characteristic in the case where the priority is given to the electric power storage, and "C" is the characteristic in the case where the priority is given to the heat storage. Fig. 7A shows the case where the price of electric power to be sold is ¥25/kWh, and Fig. 7B shows the case where the price of electric power to be sold is ¥40/kWh. In Figs. 7A and 7B, the annual heating and lighting price of the case where the priority is given to the electric power sale is cheaper than that of the case where the priority is given to the heat storage regardless of the price of electric power to be sold and the price of electric power to be purchased. The reason for this is that the heat storage device HP is a load leveling device and the price of electric power to be purchased "$d_{pur,n}$" is cheap during the time span in which the heat storage device HP is mainly operated (night).

As described above, in accordance with the present embodiment, when the price of electric power to be sold (information about the price of electric power to be sold) or the price of electric power to be purchased (information about the price of electric power to be purchased) is changed, the priority order of the plurality of destination candidates (the electric power company AC, the electric power storage device SB, and the heat storage device HP) of the surplus electric power of the solar cells PV is determined using the information about the price of electric power to be sold, the information about the price of electric power to be purchased, and the rules regarding the use of electric power. Further, the surplus electric power is sequentially provided to a corresponding destination candidate according to the priority order, so that cost effectiveness can be achieved with respect to the use of the electric power generated by the solar cells PV.

Furthermore, in accordance with the present embodiment, the electric power storage device SB and the heat storage device HP (energy storage devices) are included in the destinations. Therefore, the priority between selling the surplus electric power and purchasing the surplus electric power can be selected based on electric power sale and purchase price information, so that the electric power generated by the solar cells PV can be more effectively used.

Furthermore, in accordance with the present embodiment, when the rules regarding the use of electric power are set up, each balance of the electricity prices in the cases where the priority is given to the electric power sale, the electric power storage, and the heat storage, respectively, is calculated, so that the effective rules regarding the use of electric power can be set up accurately.

Furthermore, in accordance with the present embodiment, it is possible to set the electric power storage and the heat storage as means for storing the surplus electric power of the solar cells PV. Thus, in the rules regarding the use of electric power, the criteria for determining whether to store the surplus electric power as an electric power or a heat can be changed depending on the temperature.

Furthermore, in accordance with the present embodiment, when settings are made such that each of the electric power storage device SB and the heat storage device HP is operated (the electric power storage device SB and the heat storage device HP consume stored energy) during a specific time span, the value of the generation of the electric power of the solar cells PV is evaluated for the specific time span, so that the cost effectiveness can be evaluated accurately.

(Second embodiment)

An energy management system 1 in accordance with a second embodiment is different from the energy management system 1 in accordance with the first embodiment in that the energy management system 1 stores a plurality of rules regarding the use of electric power. Furthermore, the configuration of the system in accordance with the present embodiment is the same as the configuration of the system in accordance with the first embodiment.

The storage unit 34 in accordance with the present embodiment stores rules regarding the use of electric power (hereinafter referred to as "first rules regarding the use of electric power") as in the first embodiment, and also stores rules regarding the use of electric power (hereinafter referred to as "second rules regarding the use of electric power") in which the settings thereof are different from those of the first rules.

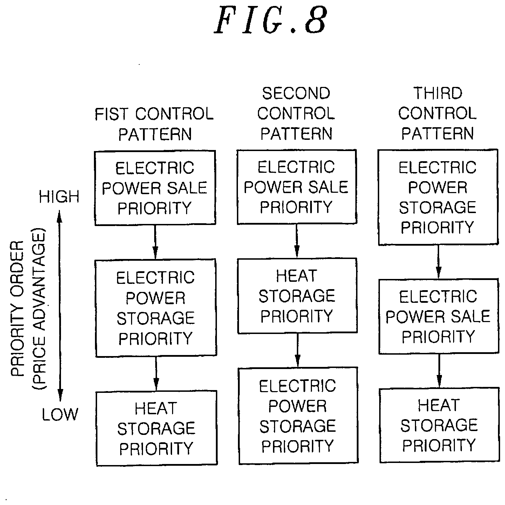

Settings are made such that the second rules regarding the use of electric power include three control patterns. Firstly, the case where the priority is given to the electric power storage is compared with the case where the priority is given to the electric power sale. Thereafter, the case where the priority is given to the electric power storage is compared with the case where the priority is given to the heat storage, as shown in Fig. 8.

The controller 36 in accordance with the present embodiment has a selection function of selecting rules regarding the use of electric power, which are applied when determining the priority order of a plurality of destinations. The controller 36 selects rules regarding the use of electric power, which are applied when the priority order is determined, from a plurality of sets of rules regarding the use of electric power (first and second rules regarding the use of electric power) stored in the storage unit 34 based on predetermined conditions. The predetermined conditions include, for example, a condition regarding whether the price of electric power to be purchased is cheaper than the price of electric power to be sold. For example, when the price of electric power to be purchased during the night is cheaper than the price of electric power to be sold, as in a home electrification contract, the second rules regarding the use of electric power are used. The controller 36 in accordance with the present embodiment corresponds to the controller and selection unit of the present invention.

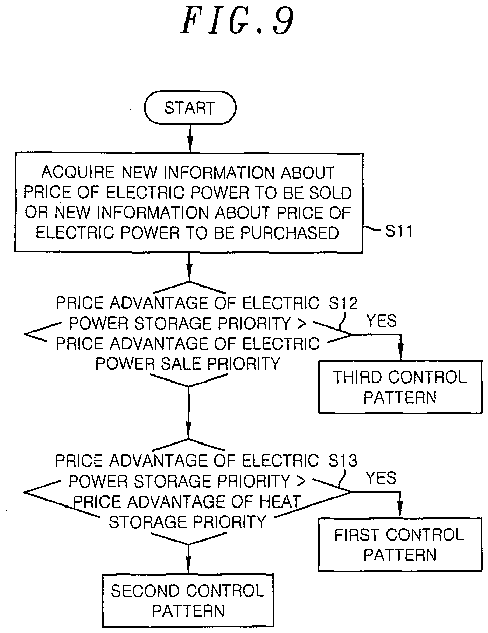

Next, an operation that is performed when the second rule regarding the use of electric power is used in the energy management system 1 in accordance with the present embodiment will be described with reference to Fig. 9. First, when the information acquisition unit 31 of the power feed control device 3 acquires new information about the price of electric power to be sold or new information about the price of electric power to be purchased (at step S11 of Fig. 9), the controller 36 refers to the second rule regarding the use of electric power for the information about the price of electric power to be sold and information about the price of electric power to be purchased, and then determines the priority order of the plurality of destinations (the electric power company AC, the electric power storage device SB, and heat storage device HP). Here, first, the price advantage of the electric power storage priority is compared with the price advantage of the electric power sale priority (at step S12). When the price advantage of the case where the priority is given to the electric power storage is greater than the price advantage of the case where the priority is given to the electric power sale, the controller 36 sets the control pattern of the surplus electric power of the solar cells PV as the third control pattern (see Fig. 8). When the price advantage of the case where the priority is given to the electric power storage is less than the price advantage of the case where the priority is given to the electric power sale, the price advantage of the case where the priority is given to the electric power storage is compared with the price advantage of the case where the priority is given to the heat storage (at step S13).

When the price advantage of the case where the priority is given to the electric power storage is greater than the price advantage of the case where the priority is given to the heat storage, the controller 36 sets the control pattern of the surplus electric power of the solar cells PV as the first control pattern (see Fig. 8). When the price advantage of the case where the priority is given to the electric power storage is less than the price advantage of the case where the priority is given to the heat storage, the controller 36 sets the control pattern of the surplus electric power of the solar cells PV as the second control pattern (see Fig. 8).

Hereinbefore, in accordance with the present embodiment, it is possible to select one from the plurality of sets of rules regarding the use of electric power (first and second rules regarding the use of electric power), so that a user can select appropriate rules regarding the use of electric power depending on the situation.

(Third embodiment)

An energy management system 1 in accordance with a third embodiment is different from the energy management system 1 in accordance with the second embodiment in that the energy management system 1 stores third rules regarding the use of electric power with the priority on environment, together with the first and second rules regarding the use of electric power. Furthermore, the configuration of the system in accordance with the present embodiment is the same as the configuration of the system in accordance with the second embodiment.

The third rules regarding the use of electric power are set up such that electric power storage to the electric power storage device SB and heat storage to the heat storage device HP always have priority over the electric power sale to the electric power company AC. The third rules regarding the use of electric power are stored in the storage unit 34, together with the first and second rules regarding the use of electric power.

The controller 36 in accordance with the present embodiment selects a rule, which is applied when the priority order of the destination is determined, from the plurality of sets of rules regarding the use of electric power (the first to third rules regarding the use of electric power) which have been stored in the storage unit 34 according to a user's intention. For example, when the user has high environmental awareness, the third rule regarding the use of electric power is selected by the user through the first setting manipulation unit 4.

As described above, in accordance with the present embodiment, the third rule regarding the use of electric power in which the priorities of the electric power storage device SB and the heat storage device HP are always higher than the electric power company AC is further stored. Thus, it is possible to select a rule from the first and second rules with the priority on cost effectiveness and the third rules with the priority on the environment according to the user's intention. When the third rule is selected, the energy management system 1 in accordance with the present embodiment can supply the electric power generated by the solar cells PV to the electric appliance L1 within the facility H as actively as possible by storing electric power in the electric power storage device SB or storing heat in the heat storage device HP. In the case of electric power generation using solar energy, an amount of $CO_2$ generated from any one of a primary energy consumption source group is almost 0. Therefore, in accordance with the present embodiment, the electric power generated by the solar cells PV is sold as little as possible and is consumed, thus reducing the burden upon the environment.

Furthermore, as a modification of the third embodiment, when the price of electric power to be sold is cheaper than a preset reference price, the third rules regarding the use of electric power may be set up such that the electric power storage to the electric power storage device SB and the heat storage to the heat storage device HP always have priority over the electric power sale to the electric power company AC. That is, when the third rule regarding the use of electric power in accordance with the modification is used, the energy management system 1 can determine the destination of the electric power generated by the solar cells PV such that environmental priority is realized when the price of electric power to be sold is cheap and that price priority is realized when the price of electric power to be sold is high.

Furthermore, as modifications of the first to third embodiments, the controller 36 may determine the priority order of a plurality of destinations using only information about the price of electric power to be sold without using the information about the price of electric power to be purchased. In the case of this modification, the priority of the electric power company AC becomes high when the price of electric power to be sold is high with respect to a specific index, and the priority of the electric power company AC becomes low when the price of electric power to be sold is low with respect to the specific index.

Furthermore, although the case where the electric power generation apparatus, which generates electric power using natural energy, corresponds to the solar cells PV has been described in the first to third embodiments, the electric power generation apparatus is not necessarily the solar cells PV and may be an apparatus which generates electric power using natural energy when the present invention is put to practical use. In the above description, the electric power generation apparatus may be, for example, a wind power generation apparatus which generates electric power using wind energy in the modification of the first to third embodiments. Even when the above-described apparatus is used as the electric power generation apparatus, this case does not cause any problem when practicing the present invention, and achieves the same efficiency as the first to third embodiments.

Furthermore, although the case where the electric power storage device SB and the heat storage device HP are used together as the energy storage device has been described in the first to third embodiments, it is not necessary to use the electric power storage device SB and the heat storage device HP together as the energy storage devices when the present invention is practiced. In the above description, any one of the electric power storage device SB and the heat storage device HP can be used as the energy storage device in a modification of the first and second embodiments. This modification does not cause any problem when practicing the present invention, and achieves the same efficiency as the first to third embodiments.

Moreover, in a modification of the first to third embodiments, the power feed control device 3 may not include the computation unit 35 and may store the rules regarding the use of electric power, which are previously set by another device based on simulation using Equations 1 to 7, in the storage unit 34.

While the invention has been shown and described with respect to the embodiments, the present invention is not limited thereto. It will be understood by those skilled in the art that various changes and modifications may be made without departing from the scope of the invention as defined in the following claims.

**Claims**

1. An energy management system (1) for managing electric power generated by an electric power generation apparatus (PV) for generating the electric power by using natural energy and electric power to be supplied to one or more electrical equipments serving as a load (L1), the energy management system (1) comprising:

   a controller (36) configured to determine a priority order of destinations to which surplus electric power of the generated electric power is supplied, the destinations including an electric power company (AC), an electric power storage device (SB) and a heat storage device (HP) and the surplus electric power being a remaining electric power after supplying the electric power generated by the electric power generation apparatus (PV) to the load (L1); and
   an information acquisition unit (31) configured to acquire information about a selling price of electric power to be sold to the electric power company (AC) and information about a purchasing price of electric power to be purchased from the electric power company (AC),
   **characterized in that**
   the energy management system (1) further comprises:

   a storage unit (34) configured to store rules regarding use of electric power,
   wherein the controller (36) selects one of the rules and determines the priority order of the destinations according to one control pattern set in the selected one of the rules based on the selling price and the purchasing price,

   wherein the rules include:

   a first rule in which a first to a sixth control patterns are set,
   the priority order according to the first control pattern being sequentially the electric power company (AC), the electric power storage device (SB) and the heat storage device (HP),
   the priority order according to the second control pattern being sequentially the electric power company (AC), the heat storage device(HP) and the electric power storage device (SB),
   the priority order according to the third control pattern being sequentially the electric power storage device (SB), the electric power company (AC) and the heat storage device (HP),
   the priority order according to the fourth control pattern being sequentially the electric power storage device (SB), the heat storage device (HP) and the electric power company (AC),
   the priority order according to the fifth control pattern being sequentially the heat storage device (HP), the electric power company (AC) and the electric power storage device (SB), and
   the priority order according to the sixth control pattern being sequentially the heat storage device (HP), the electric power storage device (SB) and the electric power company (AC),
   a second rule in which the first to the third control patterns are set, and
   a third rule in which a seventh control pattern is set such that the electric power storage and the heat storage always have higher priorities than the electric power sale.

2. The energy management system (1) of claim 1, further comprising:

   a path switching unit (2) configured to supply the electric power generated by the electric power generation apparatus (PV) to the load (L1) and to supply the surplus electric power to the destinations according to the priority order of the destinations.

3. The energy management system (1) of claim 2, further comprising:

   a computation unit (35) configured to calculate a balance of an electricity price by using a load pattern indicative of a temporal change in electric power that is supplied to the load (L1), an electric power generation pattern indicative of a temporal change in electric power that is generated by the electric power generation apparatus (PV), and the selling price and the purchasing price,
   wherein the controller (36) uses the balance when determining the priority order of the destinations.

**Patentansprüche**

1. Energieverwaltungssystem (1) zum Verwalten elektrischer Leistung, die erzeugt wird von einer elektrischen Leistungserzeugungsvorrichtung (PV) zum Erzeugen der elektrischen Leistung unter Verwendung natürlicher Energie, und elektrischer Leistung, die einem oder mehreren elektrischen Geräten zuzuführen ist, die als eine Last (L1) dienen, wobei das Energieverwaltungssystem (1) umfasst:

   einen Controller (36), der konfiguriert ist, eine Prioritätenfolge von Bestimmungsorten zu bestimmen, denen überschüssige elektrische Leistung der erzeugten elektrischen Leistung zugeführt wird, wobei die Bestimmungsorte eine Elektrizitätsgesellschaft (AC), eine elektrische Leistungsspeichervorrichtung (SB) und eine Wärmespeichervorrichtung (HP) umfassen und die überschüssige elektrische Leistung eine verbleibende elektrische Leistung nach dem Zuführen der elektrischen Leistung, die von der elektrischen Leistungserzeugungsvorrichtung (PV) erzeugt wird, an die Last(L1) ist; und
   eine Informationserfassungseinheit (31), die konfiguriert ist, Informationen über einen Verkaufspreis von elektrischer Leistung, die an die Elektrizitätsgesellschaft (AC) verkauft wird, und Informationen über einen Kaufpreis von elektrischer Leistung zu erfassen, die von der Elektrizitätsgesellschaft (AC) zu kaufen ist,
   **dadurch gekennzeichnet, dass**
   Energieverwaltungssystem (1) ferner umfasst:

   eine Speichereinheit (34), die konfiguriert ist, Regeln bezüglich der Verwendung von elektrischer Leistung zu speichern,
   wobei der Controller (36) eine der Regeln auswählt und die Prioritätenfolge der Bestimmungsorte gemäß einem Steuer- bzw. Kontrollschema bzw. - muster bestimmt, das in der ausgewählten Einen der Regeln festgelegt ist, und zwar basierend auf dem Verkaufspreis und dem Kaufpreis,

   wobei die Regeln enthalten:

   eine erste Regel, in der ein erstes bis sechstes Steuer- bzw. Kontrollschema bzw. -muster festgelegt sind, wobei die Prioritätenfolge gemäß dem ersten Kontrollmuster sequentiell die Elektrizitätsgesellschaft (AC), die elektrische Leistungsspeichervorrichtung (SB) und die Wärmespeichervorrichtung (HP) ist,
   die Prioritätenfolge gemäß dem zweiten Kontrollmuster sequentiell die Elektrizitätsgesellschaft (AC), die Wärmespeichervorrichtung (HP) und die elektrische Leistungsspeichervorrichtung (SB) ist,
   die Prioritätenfolge gemäß dem dritten Kontrollmuster sequentiell die elektrische Leistungsspeichervorrichtung (SB), die Elektrizitätsgesellschaft (AC) und die Wärmespeichervorrichtung (HP) ist,
   die Prioritätenfolge gemäß dem vierten Kontrollmuster sequentiell die elektrische Leistungsspeichervorrichtung (SB), die Wärmespeichervorrichtung (HP) und die Elektrizitätsgesellschaft (AC) ist,
   die Prioritätenfolge gemäß dem fünften Kontrollmuster sequentiell die Wärmespeichervorrichtung (HP), die Elektrizitätsgesellschaft (AC) und die elektrische Leistungsspeichervorrichtung (SB) ist, und
   die Prioritätenfolge gemäß dem sechsten Kontrollmuster sequentiell die Wärmespeichervorrichtung (HP), die elektrische Leistungsspeichervorrichtung (SB) und die Elektrizitätsgesellschaft (AC) ist,
   eine zweite Regel, in der das erste bis dritte Steuer- bzw. Kontrollschema bzw. -muster festgelegt sind, und
   eine dritte Regel, in der ein siebtes Steuer- bzw. Kontrollschema bzw. -muster derart festgelegt ist, dass der elektrische Leistungsspeicher und der Wärmespeicher immer höhere Prioritäten haben als der Verkauf von elektrischer Leistung.

2. Energieverwaltungssystem (1) nach Anspruch 1, ferner umfassend:

   eine Pfadumschalteinheit (2), die konfiguriert ist, die elektrische Leistung, die von der elektrischen Leistungserzeugungsvorrichtung (PV) erzeugt wird, der Last (L1) zuzuführen und die überschüssige elektrische Leistung den Bestimmungsorten gemäß der Prioritätenfolge der Bestimmungsorte zuzuführen.

3. Energieverwaltungssystem (1) nach Anspruch 2, ferner umfassend:

   eine Recheneinheit (35), die konfiguriert ist, ein Gleichgewicht eines Elektrizitätspreises unter Verwendung eines Lastschemas bzw. -musters, das eine zeitliche Änderung der elektrischen Leistung angibt, die der Last (L1) zugeführt wird, eines Elektrische-Leistung-Erzeugungsschemas bzw. -musters, das eine zeitliche Änderung der elektrischen Leistung angibt, die von der elektrischen Leistungserzeugungsvorrichtung (PV) erzeugt wird, und des Verkaufspreises und des Kaufpreises zu berechnen,

wobei der Controller (36) das Gleichgewicht beim Bestimmen der Prioritätenfolge der Bestimmungsorte verwendet.

**Revendications**

1. Système de gestion d'énergie (1) pour gérer de la puissance électrique générée par un appareil de génération de puissance électrique (PV) pour générer la puissance électrique en utilisant de l'énergie naturelle et de la puissance électrique devant être fournie à un ou plusieurs équipements électriques servant de charge (L1), le système de gestion d'énergie (1) comprenant :

   un contrôleur (36) configuré pour déterminer un ordre de priorité de destinations vers lesquelles un excédent de puissance électrique de la puissance électrique généré est fourni, les destinations incluant une société de puissance électrique d'électricité (AC), un dispositif de stockage de puissance électrique (SB) et un dispositif de stockage de chaleur (HP), et l'excédent de puissance électrique étant une puissance électrique restante après la fourniture de la puissance électrique générée par l'appareil de génération de puissance électrique (PV) à la charge (L1) ; et
   un module d'acquisition d'informations (31) configuré pour acquérir des informations concernant un prix de vente de puissance électrique devant être vendue à la société de puissance électrique (AC) et des informations concernant un prix d'achat de puissance électrique devant être achetée à la société de puissance électrique (AC), **caractérisé en ce que**
   le système de gestion d'énergie (1) comprend en outre :

      un module de stockage (34) configuré pour stocker des règles concernant l'utilisation de puissance électrique,
      dans lequel le contrôleur (36) sélectionne une des règles et détermine l'ordre de priorité des destinations en fonction d'un schéma de commande défini dans la règle sélectionnée parmi les règles en fonction du prix de vente et du prix d'achat,

   dans lequel les règles incluent :

      une première règle dans laquelle un premier à un sixième schémas de commande sont définis,
      l'ordre de priorité en fonction du premier schéma de commande étant séquentiellement la société de puissance électrique (AC), le dispositif de stockage de puissance électrique (SB) et le dispositif de stockage de chaleur (HP),
      l'ordre de priorité en fonction du deuxième schéma de commande étant séquentiellement la société de puissance électrique (AC), le dispositif de stockage de chaleur (HP) et le dispositif de stockage de puissance électrique (SB),
      l'ordre de priorité en fonction du troisième schéma de commande étant séquentiellement le dispositif de stockage de puissance électrique (SB), la société de puissance électrique (AC) et le dispositif de stockage de chaleur (HP), l'ordre de priorité en fonction du quatrième schéma de commande étant séquentiellement le dispositif de stockage de puissance électrique (SB), le dispositif de stockage de chaleur (HP) et la société de puissance électrique (AC), l'ordre de priorité en fonction du cinquième schéma de commande étant séquentiellement le dispositif de stockage de chaleur (HP), la société de puissance électrique (AC) et le dispositif de stockage de puissance électrique (SB), et
      l'ordre de priorité en fonction du sixième schéma de commande étant séquentiellement le dispositif de stockage de chaleur (HP), le dispositif de stockage de puissance électrique (SB) et la société de puissance électrique (AC), une deuxième règle dans laquelle les premier à troisième schémas de commande sont définis, et
      une troisième règle dans laquelle un septième schéma de commande est défini de sorte que le stockage de puissance électrique et le stockage de chaleur ont toujours des priorités plus élevées que la vente de puissance électrique.

2. Système de gestion d'énergie (1) selon la revendication 1, comprenant en outre :

   un module de commutation de trajet (2) configuré pour fournir la puissance électrique générée par l'appareil de génération de puissance électrique (PV) à la charge (L1) et pour fournir l'excédent de puissance électrique aux destinations en fonction de l'ordre de priorité des destinations.

**3.** Système de gestion d'énergie (1) selon la revendication 2, comprenant en outre :

un module de calcul (35) configuré pour calculer un solde d'un prix d'électricité en utilisant un schéma de charge indicateur d'un changement temporel de puissance électrique qui est fournie à la charge (L1), un schéma de génération de puissance électrique indicateur d'un changement temporel de puissance électrique qui est générée par l'appareil de génération de puissance électrique (PV), et le prix de vente et le prix d'achat, dans lequel le contrôleur (36) utilise le solde lors de la détermination de l'ordre de priorité des destinations.

## FIG.1

ENERGY MANAGEMENT SYSTEM

1

3

ELECTRIC POWER FEEDING CONTROL APPARATUS 33

FIRST SETTING MANIPULATION UNIT ~4

INFORMATION ACQUIREMENT UNIT

LOAD INFORMATION ACQUIREMENT UNIT

S N

32

31

36

SECOND SETTING MANIPULATION UNIT

INFORMATION TRANSMISSION UNIT

CONTROLLER (DESTINATION DERIVATION UNIT)

STORAGE UNIT

5

34

37

35

DESTINATION SETTING UNIT

CALCULATION UNIT

AC

2

H~

L1

ELECTRIC POWER COMPANY

ELECTRIC POWER DISTRIBUTION BOARD

ELECTRIC APPLIANCE

SOLAR CELLS

ELECTRIC POWER STORAGE DEVICE

PV

HP

SB

L2

HEAT STORAGE DEVICE

HOT-WATER SUPPLY LOAD EQUIPMENT

16

# FIG.2

| | FIST CONTROL PATTERN | SECOND CONTROL PATTERN | THIRD CONTROL PATTERN | FOURTH CONTROL PATTERN | FIFTH CONTROL PATTERN | SIXTH CONTROL PATTERN |
|---|---|---|---|---|---|---|
| **HIGH** ↑ | ELECTRIC POWER SALE PRIORITY | ELECTRIC POWER SALE PRIORITY | ELECTRIC POWER STORAGE PRIORITY | ELECTRIC POWER STORAGE PRIORITY | HEAT STORAGE PRIORITY | HEAT STORAGE PRIORITY |
| PRIORITY ORDER (PRICE ADVANTAGE) | ELECTRIC POWER STORAGE PRIORITY | HEAT STORAGE PRIORITY | ELECTRIC POWER SALE PRIORITY | HEAT STORAGE PRIORITY | ELECTRIC POWER SALE PRIORITY | ELECTRIC POWER STORAGE PRIORITY |
| ↓ **LOW** | HEAT STORAGE PRIORITY | ELECTRIC POWER STORAGE PRIORITY | HEAT STORAGE PRIORITY | ELECTRIC POWER SALE PRIORITY | ELECTRIC POWER STORAGE PRIORITY | ELECTRIC POWER SALE PRIORITY |

EP 2 485 189 B1

# FIG.3

## FIG.4

# FIG.5

# FIG.6A

# FIG.6B

## FIG. 7A

A : y=8. 9731x+47. 676
B : y=6. 5314x+124. 14
C : y=8. 9245x+71. 432

PRICE OF ELECTRIC POWER
TO BE PURCHASED [¥/kWh]

## FIG. 7B

A : y=8. 9731x−13. 331
B : y=6. 5314x+109. 23
C : y=8. 9245x+32. 5

PRICE OF ELECTRIC POWER
TO BE PURCHASED [¥/kWh]

# FIG.8

FIST CONTROL PATTERN

SECOND CONTROL PATTERN

THIRD CONTROL PATTERN

PRIORITY ORDER (PRICE ADVANTAGE)

HIGH

LOW

| FIST CONTROL PATTERN | SECOND CONTROL PATTERN | THIRD CONTROL PATTERN |
|---|---|---|
| ELECTRIC POWER SALE PRIORITY | ELECTRIC POWER SALE PRIORITY | ELECTRIC POWER STORAGE PRIORITY |
| ELECTRIC POWER STORAGE PRIORITY | HEAT STORAGE PRIORITY | ELECTRIC POWER SALE PRIORITY |
| HEAT STORAGE PRIORITY | ELECTRIC POWER STORAGE PRIORITY | HEAT STORAGE PRIORITY |

# FIG.9

```
                    ┌──────────┐
                    │  START   │
                    └──────────┘
                         │
                         ▼
        ┌────────────────────────────────────┐
        │   ACQUIRE NEW INFORMATION ABOUT     │
        │ PRICE OF ELECTRIC POWER TO BE SOLD  │
        │ OR NEW INFORMATION ABOUT PRICE OF   │
        │ ELECTRIC POWER TO BE PURCHASED      │──S11
        └────────────────────────────────────┘
                         │
                         ▼
            PRICE ADVANTAGE OF ELECTRIC  S12
            POWER STORAGE PRIORITY >        YES    ┌──────────────┐
            PRICE ADVANTAGE OF ELECTRIC  ─────────▶│ THIRD CONTROL│
                POWER SALE PRIORITY                │   PATTERN    │
                         │                         └──────────────┘
                         ▼
            PRICE ADVANTAGE OF ELECTRIC  S13
            POWER STORAGE PRIORITY >        YES    ┌──────────────┐
            PRICE ADVANTAGE OF HEAT      ─────────▶│ FIRST CONTROL│
                STORAGE PRIORITY                   │   PATTERN    │
                         │                         └──────────────┘
                         ▼
                ┌──────────────┐
                │SECOND CONTROL│
                │   PATTERN    │
                └──────────────┘
```

## REFERENCES CITED IN THE DESCRIPTION

### Patent documents cited in the description

- WO 2008125696 A2
- US 2008046387 A1
- GB 2448504 A
- JP 2008158701 A
- US 2004263116 A1
- JP 2002369381 A
- JP 2005287211 A